# EUROPÄISCHE PATENTANMELDUNG

(11) **EP 1 024 451 A1**
(43) Veröffentlichungstag der Anmeldung: **02.08.2000**
(21) Anmeldenummer: 99101411.9
(22) Anmeldetag: 26.01.1999
(51) Int. Cl.: G06K 7/00

(54) **Lesegerät für tragbare Datenträger**

(71) Anmelder: SIEMENS AKTIENGESELLSCHAFT, 80333 München (DE)
(72) Erfinder: Reiner, Robert, 85579 Neubiberg (DE); Ogawa, Seiki, Tokyo 153 Meguro-Ku (JP)

(57) **Zusammenfassung**

Es wird ein Lesegerät mit einem Antennenkreis zur kontaktlosen Leistungsversorgung von Chipkarten mit einem Induktions-kreis beschrieben, das sich insbesondere auszeichnet durch eine Vorrichtung (7, 8) zum Erfassen und Überwachen der Resonanzfrequenz des Antennenkreises (1, 2) sowie zum Erzeugen einer Signalisierung, wenn die Resonanzfrequenz durch eine Mehrzahl von Chipkarten, die sich in dem Feld des Antennenkreises befinden, einen vorbestimmten Wert unterschreitet.

## Beschreibung

Die Erfindung betrifft ein Lesegerät mit einem Antennenkreis zur kontaktlosen Leistungsversorgung von tragbaren Datenträgern, insbesonder Chipkarten, mit einem Induktionskreis gemäß dem Oberbegriff von Anspruch 1.

Tragbare Datenträger, im folgenden als Chipkarten bezeichnet, wobei auch andere Formen wie Uhren, Anhänger usw. gemeint sind, dieser Art weisen im allgemeinen elektronische Schaltkreise mit einem Prozessor, einem Speicher und anderen Bauelementen auf und dienen dazu, ihren Inhaber gegenüber einem Lesegerät zu identifizieren und zur Ausführung verschiedener Vorgänge zu berechtigen bzw. einen Informationsaustausch durchzuführen.

Zum Betrieb solcher Chipkarten muß den elektronischen Schaltkreisen eine Versorgungsspannung zugeführt werden. Es ist bekannt, die Versorgungsspannung von dem Lesegerät kontaktlos durch Induktion auf die Chipkarte zu übertragen. Zu diesem Zweck befindet sich auf der Chipkarte ein Induktionskreis, an den eine Schaltung zur Aufbereitung der induzierten Spannung sowie zur Zuführung dieser Spannung als Versorgungsspannung zu den Schaltkreisen angeschlossen ist.

Ein Problem kann dabei jedoch dann entstehen, wenn sich gleichzeitig zu viele Karten innerhalb der Reichweite eines Lesegerätes befinden. In diesen Fall wird der Antennenkreis des Lesegerätes zu stark bedämpft, so daß die Antennenspannung absinkt und die Sendeleistung des Lesegerätes möglicherweise nicht mehr ausreicht, um alle Karten zu versorgen. Ein Informationsaustausch und eine Erkennung der Karten ist dann nicht mehr sichergestellt.

Es wäre zwar möglich, ein Absinken der Antennenspannung zu überwachen. Diese Lösung ist allerdings nicht sehr zuverlässig, da die Antennenspannung auch durch die Versorgungsspannung des Lesegerätes beeinflußt wird, die insbesondere dann, wenn das Lesegerät durch eine Batterie gespeist wird, relativ stark schwanken kann. Ein weiterer Nachteil dieser Lösung besteht darin, daß nicht zwischen Chipkarten und anderen Teilen, die in das Sendefeld des Lesegerätes eingebracht werden und Wirbelstromverluste verursachen, unterschieden werden kann.

Der Erfindung liegt deshalb die Aufgabe zugrunde, ein Lesegerät der eingangs genannten Art zu schaffen, mit dem in zuverlässiger Weise eine Signalisierung erzeugt werden kann, wenn sich innerhalb seiner Reichweite so viele Chipkarten befinden, daß eine ausreichende Leistungsversorgung nicht mehr gewährleistet ist.

Gelöst wird diese Aufgabe bei einem Lesegerät, das einen Antennenkreis zur kontaktlosen Leistungsversorgung von Chipkarten mit einem Induktionskreis aufweist, gemäß Anspruch 1 dadurch, daß eine Vorrichtung zum Erfassen der Resonanzfrequenz des Antennenkreises sowie zum Erzeugen einer Signalisierung vorgesehen ist, wenn die Resonanzfrequenz durch eine Mehrzahl von Chipkarten, die sich in dem Feld des Antennenkreises befinden, einen vorbestimmten Wert unterschreitet.

Ein besonderer Vorteil dieser Lösung besteht darin, daß die Überwachung im wesentlichen unbeeinflußt von der Amplitude der Antennenspannung bleibt. Der Erfindung liegt die Erkenntnis zugrunde, daß die Resonanzfrequenz des Antennenkreises durch das Vorhandensein von Chipkarten nicht nur bedämpft, sondern in Abhängigkeit von der Anzahl der Chipkarten auch zu niedrigeren Werten verschoben wird.

Ein weiterer Vorteil dieser Lösung besteht darin, daß zwischen Chipkarten und anderen Gegenständen, wie zum Beispiel leitenden Folien oder Münzen, unterschieden werden kann, da diese Gegenstände nur eine weit geringere Frequenzverschiebung verursachen.

Die Unteransprüche haben vorteilhafte Weiterbildungen der Erfindung zum Inhalt.

Danach umfaßt die genannte Vorrichtung insbesondere eine erste Einrichtung zum Umschalten der Resonanzfrequenz des Antennenkreises von einem ersten niedrigen Wert, der im wesentlichen einer Betriebsfrequenz entspricht, auf einen zweiten höheren Wert, eine zweite Einrichtung zum Erfassen und Auswerten einer Änderung einer Spannungsamplitude in dem Antennenkreis beim Umschalten auf den zweiten Wert der Resonanzfrequenz und eine dritte Einrichtung zum Erzeugen der Signalisierung, wenn sich die Spannungsamplitude um einen vorbestimmten Wert vergrößert hat.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: ein Prinzipschaltbild eines Antennenkreises eines erfindungsgemäßen Lesegerätes;
- Fig. 2: ein Diagramm zur Erläuterung der Frequenzverschiebung und
- Fig. 3: verschiedene Spannungsverläufe zur Auswertung der erfaßten Frequenzverschiebung.

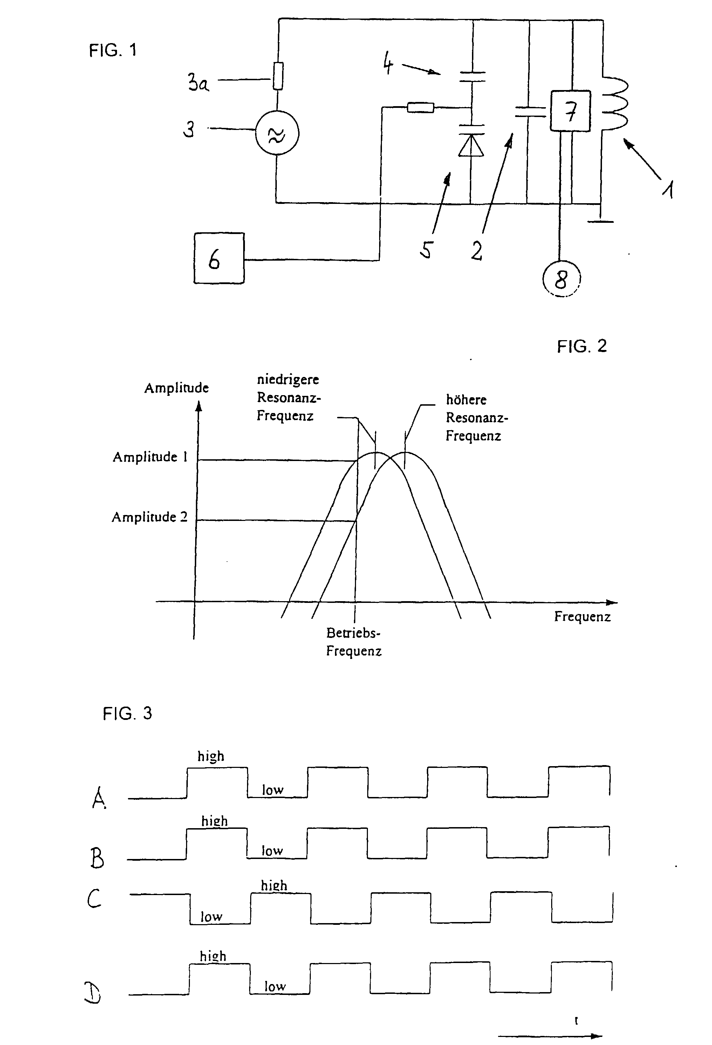

Ein Antennenkreis eines erfindungsgemäßen Lesegerätes umfaßt gemäß Figur 1 einen Schwingkreis aus einer Spule 1 und einem dazu parallelgeschalteten ersten Kondensator 2, der an eine entsprechende HF-Spannungsquelle 3 mit Vorwiderstand 3a angeschlossen ist, wobei die Frequenz der HF-Spannung die Betriebsfrequenz ist. Parallel zu dem Schwingkreis liegt eine Reihenschaltung aus einem zweiten Kondensator 4 und einer Kapazitätsdiode (Varicap-Diode) 5. Die Kapazitätsdiode ist an eine Einheit 6 zum Erzeugen und Umschalten zwischen einer niedrigen und einer hohen Sperrspannung angeschlossen.

Zum Erfassen und Auswerten einer Änderung der Spannungsamplitude in dem Antennenkreis ist eine Schaltungseinheit 7 vorgesehen, mit der eine Signalisierungseinrichtung 8 aktivierbar ist.

Im normalen Betrieb liegt an der Kapazitätsdiode die niedrige Sperrspannung an. Dies hat zur Folge, daß die Kapazität der Kapazitätsdiode 5 hoch ist und somit die Resonanzfrequenz des Schwingkreises einen niedrigen Wert aufweist, der so eingestellt ist, daß er im wesentlichen der Betriebsfrequenz entspricht oder geringfügig darüber liegt.

Mit dieser Frequenz wird die zur Versorgung der Chipkarten erforderliche HF-Leistung ausgesendet.

Mit bestimmten, vorzugsweise periodischen Zeitabständen, die frei wählbar sind, wird durch die Einheit 6 eine hohe Sperrspannung (Schaltspannung) an die Kapazitätsdiode 5 angelegt, so daß sich die Kapazität der Kapazitätsdiode 5 vermindert und die Resonanzfrequenz des Schwingkreises entsprechend erhöht. Figur 2 zeigt die dadurch eintretende Änderung der Spannungsamplitude in dem Antennenkreis.

Diese Änderung wird durch die Schaltungseinheit 7 überwacht und ausgewertet. Bei dem in Figur 2 gezeigten Betriebsfall vermindert sich die Spannungsamplitude durch Umschaltung auf die höhere Resonanzfrequenz von dem dort angedeuteten Amplitudenwert 1 auf den Amplitudenwert 2. Dies bedeutet, daß die niedrige Resonanzfrequenz im unmittelbaren Bereich der Betriebsfrequenz liegt, so daß sich nur eine oder wenige Chipkarten innerhalb der Reichweite des Lesegerätes befinden.

Wenn im Gegensatz dazu eine bestimmte Mindestanzahl von Chipkarten innerhalb der Reichweite des Lesegerätes überschritten wird, wird, wie oben erwähnt wurde, die (niedrige) Resonanzfrequenz nach unten verschoben. In diesem Fall führt ein Umschalten auf die höhere Resonanzfrequenz dazu, daß sich die Spannungsamplitude erhöht, da diese näher an der Betriebsfrequenz liegt.

Die Schaltungseinheit 7 aktiviert dann die Signalisierungseinrichtung 8, so daß diese zum Beispiel ein geeignetes Alarmsignal erzeugt, mit dem angezeigt wird, daß auf Grund der Vielzahl von Chipkarten eine ausreichende Leistungsversorgung nicht mehr sichergestellt ist.

Mit der Schaltungseinheit 7 ist also ein Phasenvergleich zwischen der an die Kapazitätsdiode 5 geführten hohen Sperrspannung und der Änderung der Spannungsamplitude in dem Antennenkreis durchzuführen. Dies ist in bekannter Weise mit Komparatoren und XOR-Gattern oder anderen Schaltungen leicht realisierbar.

Die Signalisierungseinrichtung 8 kann ein Alarmgeber oder eine beliebige andere Einrichtung sein, mit der ein Alarmsignal erzeugt und/oder das Lesegerät abgeschaltet und/oder eine andere Maßnahme getroffen wird, die von der jeweiligen Anwendung des Lesegerätes abhängt.

Anstelle der Umschaltung der Resonanzfrequenz ist es auch möglich, die Betriebsfrequenz des Antennenkreises geringfügig zu verstimmen, um die gleiche Information im Hinblick auf eine mögliche Verschiebung der Resonanzfrequenz zu erhalten.

Figur 3 zeigt den Zusammenhang zwischen den zeitlichen Spannungsverläufen und den Amplituden bei verschiedenen Betriebsfällen. Die Schaltspannung (A) wird periodisch zwischen dem hohen und dem niedrigen Wert umgeschaltet. Entsprechend verändert sich auch die Resonanzfrequenz (B) und wechselt zwischen dem hohen und dem niedrigen Wert. Wenn im normalen Betriebsfall (C) die Resonanzfrequenz bei oder geringfügig über der Betriebsfrequenz liegt, vermindert sich die Spannungsamplitude in dem Antennenkreises beim Umschalten auf die hohe Resonanzfrequenz. Wenn sich hingegen zu viele Chipkarten innerhalb der Reichweite des Antennenkreises befinden, so daß die (niedrige) Resonanzfrequenz nach unten verschoben wird und unterhalb der Betriebsfrequenz liegt (D), vergrößert sich durch ein Umschalten die Spannungsamplitude, da die höhere Resonanzfrequenz näher an der Betriebsfrequenz liegt.

Zur Ermittlung der Resonanzfrequenzverschiebung ist es auch möglich, den Antennenkreis automatisch abzustimmen und durch Auswertung des Regelvorgangs ein Signal zu erzeugen, mit dem eine unzulässige Verschiebung der Resonanzfrequenz nach unten angezeigt wird.

## Patentansprüche

1. Lesegerät mit einem Antennenkreis zur kontaktlosen Leistungsversorgung von tragbaren Datenträgern, insbesonder von Chipkarten, mit einem Induktionskreis,
**gekennzeichnet durch** eine Vorrichtung (7, 8) zum Erfassen der Resonanzfrequenz des Antennenkreises (1, 2) sowie zum Erzeugen einer Signalisierung, wenn die Resonanzfrequenz durch eine Mehrzahl von tragbaren Datenträgern, die sich in dem Feld des Antennenkreises befinden, einen vorbestimmten Wert unterschreitet.

2. Lesegerät nach Anspruch 1,
**dadurch gekennzeichnet,** dass die Vorrichtung umfaßt:
eine erste Einrichtung (5, 6) zum Umschalten der Resonanzfrequenz des Antennenkreises von einem ersten niedrigen Wert, der im wesentlichen einer Betriebsfrequenz entspricht, auf einen zweiten höheren Wert,
eine zweite Einrichtung (7) zum Erfassen und Auswerten einer Änderung einer Spannungsamplitude in dem Antennenkreis beim Umschalten auf den zweiten Wert der Resonanzfrequenz und eine dritte Einrichtung (8) zum Erzeugen der Signalisierung, wenn sich die Spannungsamplitude um einen vorbestimmten Wert vergrößert hat.

3. Lesegerät nach Anspruch 2,
**dadurch gekennzeichnet,** dass die erste Einrichtung eine Kapazitätsdiode (5) und eine Schalteinheit (6) zum Erzeugen und Umschalten zwischen einer niedrigen und einer hohen Sperrspannung sowie zum Anlegen dieser Sperrspannungen an die Kapazitätsdiode aufweist.

4. Lesegerät nach Anspruch 2 oder 3,
**dadurch gekennzeichnet,** dass die zweite Einrichtung (7) einen Phasenkomparator und ein XOR-Gatter aufweist.
